# FASCICULE DE BREVET EUROPEEN

(11) **EP 2 925 543 B1**
(45) Date de publication et mention de la délivrance du brevet: **22.11.2017**
(21) Numéro de dépôt: 13799000.8
(22) Date de dépôt: 28.11.2013
(51) Int. Cl.: B60C 15/05, B60C 15/06

(54) **BOURRELET DE PNEUMATIQUE POUR AVION**
REIFENWULST FÜR FLUGZEUGE
TIRE BEAD FOR AIRCRAFT

(30) Priorité: 29.11.2012 FR 1261378
(43) Date de publication de la demande: 07.10.2015
(73) Titulaire: Compagnie Générale des Etablissements Michelin, 63000 Clermont-Ferrand (FR)
(72) Inventeur: SOUCHET, Eric, F-63040 Clermont-Ferrand Cedex 9 (FR); COMPS, Olivier, F-63040 Clermont-Ferrand Cedex 9 (FR)
(74) Mandataire: Millanvois, Patrick Jacques Jean
(86) Numéro de dépôt international: PCT/EP2013/074925
(87) Numéro de publication internationale: WO 2014/083090

(56) Documents cités:
- EP-A1- 0 770 504
- EP-A1- 0 881 104
- EP-A1- 1 452 346

## Description

La présente invention concerne un pneumatique pour avion, dont l'usage est caractérisé par des conditions de pression, de charge et de vitesse élevées.

Les conditions de pression et de charge, pour une dimension donnée de pneumatique pour avion, sont en particulier définies par la norme de la Tire and Rim Association, appelée communément norme TRA. A titre indicatif, la pression de gonflage d'un pneumatique pour avion est usuellement au moins égale à 9 bars et la charge appliquée correspondante est telle que la flèche du pneumatique est au moins égale à 30%. La flèche du pneumatique est, par définition, sa déformation radiale ou variation de hauteur radiale, lorsque celui-ci passe d'un état gonflé non chargé à un état gonflé chargé en statique, dans les conditions de pression et de charge telles que définies par la norme de la TRA.

Par condition de vitesse élevée, on entend une vitesse pouvant atteindre 360 km/h au cours des phases de décollage ou d'atterrissage de l'avion.

L'invention concerne plus particulièrement les bourrelets du pneumatique, c'est-à-dire les parties du pneumatique, réunies respectivement par l'intermédiaire de deux flancs à une bande de roulement, qui assurent la liaison mécanique entre le pneumatique et la jante sur laquelle il est monté ou jante de montage. L'ensemble constitué par un pneumatique et sa jante de montage est appelé ensemble monté.
Les documents suivants divulguent des exemples connus de bourrelets de pneumatiques: EP-A-0770504, EP-A-0881104 et EP-A-1452346.

Un pneumatique ayant une géométrie de révolution par rapport à un axe de rotation, sa géométrie peut être décrite dans un plan méridien contenant son axe de rotation. Dans un plan méridien donné, les directions radiale, axiale et circonférentielle désignent respectivement les directions perpendiculaire à l'axe de rotation, parallèle à l'axe de rotation et perpendiculaire au plan méridien. Dans ce qui suit, les expressions « radialement intérieur » et « radialement extérieur» signifient respectivement « plus proche de l'axe de rotation, selon la direction radiale » et « plus éloigné de l'axe de rotation, selon la direction radiale ». Les expressions « axialement intérieur » et « axialement extérieur» signifient respectivement « plus proche du plan équatorial, selon la direction axiale » et « plus éloigné du plan équatorial, selon la direction axiale », le plan équatorial étant le plan perpendiculaire à l'axe de rotation et passant par le milieu de la bande de roulement.

Un pneumatique radial comprend une armature de renforcement, comprenant une armature de sommet, radialement intérieure à la bande de roulement, et une armature de carcasse, radialement intérieure à l'armature de sommet.

L'armature de carcasse d'un pneumatique radial pour avion, telle que décrite, par exemple, dans le document EP 1 381 525, comprend au moins une couche de carcasse.

Une couche de carcasse est constituée d'éléments de renforcement, ou renforts, enrobés dans un matériau élastomérique, parallèles entre eux et formant avec la direction circonférentielle un angle sensiblement égal à 90°, c'est-à-dire compris entre 85° et 95°. Les renforts sont le plus souvent des câbles constitués de filés de filaments textiles, préférentiellement en polyamides aliphatiques et/ou en polyamides aromatiques.

Une couche de carcasse est dite retournée, lorsqu'elle s'enroule dans chaque bourrelet, autour d'un élément de renforcement circonférentiel le plus souvent métallique et de section méridienne sensiblement circulaire, appelé tringle, depuis l'intérieur vers l'extérieur du pneumatique, pour former un retournement dont l'extrémité est radialement extérieure au point le plus radialement extérieur de la tringle. Les couches de carcasse retournées sont généralement les couches de carcasse les plus proches de la cavité intérieure du pneumatique et donc les plus axialement intérieures, dans les flancs.

Une couche de carcasse est dite embarrée, lorsqu'elle s'enroule dans chaque bourrelet, autour d'une tringle, depuis l'extérieur vers l'intérieur du pneumatique, jusqu'à une extrémité généralement radialement intérieure au point le plus radialement extérieur de la tringle. Les couches de carcasse embarrées sont généralement les couches de carcasse les plus proches de la surface extérieure du pneumatique et donc les plus axialement extérieures, dans les flancs.

La liaison mécanique entre chaque bourrelet de pneumatique et la jante est essentiellement réalisée par l'intermédiaire de deux surfaces de contact. Une première surface de contact, ou surface de contact sous tringle, est établie, radialement à l'intérieur de la tringle, entre la face radialement intérieure du bourrelet et une portion de jante sensiblement axiale, ou siège de jante (ou « seat »), destinée à fixer la position radiale du bourrelet lorsque le pneumatique est monté et gonflé. Une deuxième surface de contact est établie, axialement à l'extérieur de la tringle, entre la face axialement extérieure du bourrelet et une portion de jante sensiblement radiale, ou rebord de jante (ou « flange »), destinée à fixer la position axiale du bourrelet lorsque le pneumatique est monté et gonflé. Les surfaces de contact entre le bourrelet et la jante, et en particulier la surface de contact sous tringle, sont des zones de fortes pressions.

Dans chaque bourrelet, radialement à l'intérieur de la portion d'armature de carcasse radialement intérieure de la tringle, c'est-à-dire radialement à l'intérieur de la couche de carcasse la plus radialement intérieure par rapport à la tringle, est positionnée une portion de bourrelet, appelée portion de serrage sous tringle, en contact par l'intermédiaire de la face radialement intérieure du bourrelet avec le siège de jante. Cette portion de serrage sous tringle conditionne les efforts de serrage entre le bourrelet du pneumatique et le siège de jante. Ces efforts de serrage dépendent de l'épaisseur de la portion de serrage sous tringle et des propriétés mécaniques des matériaux la constituant.

La portion de serrage sous tringle comprend au moins une couche dite de surface, destinée à entrer en contact avec le siège de jante par la face axialement intérieur de bourrelet, le plus souvent constituée par un matériau élastomérique.

Un matériau élastomérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement M d'un matériau élastomérique, exprimé en méga pascals (MPa), la contrainte de traction mesurée pour un allongement de 10% de l'éprouvette. On définit le module de cisaillement G comme étant égal au tiers du module d'élasticité à 10% d'allongement M, dans l'hypothèse d'un matériau élastomérique incompressible caractérisé par un coefficient de Poisson égal à 0.5. Le module de cisaillement G est exprimé en MPa ou N/mm². La rigidité de cisaillement K d'une couche d'épaisseur E, exprimée en mm, et de surface unitaire S égale à 1 mm², constituée par un matériau élastomérique de module de cisaillement G, est égale au produit du module de cisaillement G par la surface unitaire S, divisé par l'épaisseur E. La rigidité de cisaillement K est alors exprimée en N/mm.

Le matériau élastomérique d'une couche de surface d'une portion de serrage sous tringle a le plus souvent un module d'élasticité à 10% d'allongement au moins égal à 5 MPa et au plus égal à 9 MPa.

Dans le cas d'un ensemble monté pour avion, une jante est dimensionnée pour assurer un nombre donné de cycles de décollages et d'atterrissages, par exemple 12000 cycles. La jante est contrôlée périodiquement, typiquement tous les 500 cycles. Une jante est couramment retirée prématurément, en raison des dommages constatés au niveau des surfaces de contact avec les bourrelets du pneumatique, avant la fin de sa vie théorique, par exemple à la moitié de sa vie, soit environ au bout de 6000 cycles. Ceci entraîne donc une perte économique relative à l'exploitation de la jante.

Les dommages sont constatés sur le siège de jante dans la surface de contact sous tringle. Ces dommages, appelés « pits », sont des défauts de surface de forme sensiblement elliptiques, caractérisés par un grand axe pouvant atteindre 2 mm et un petit axe pouvant atteindre 0.5 mm, la profondeur de tels défauts pouvant atteindre 0.5 mm. Les défauts de taille maximale admissible sont appelés défauts de taille critique ou défauts critiques. Au-delà d'une taille critique, les défauts sont considérés comme inadmissibles et leur occurrence entraîne le retrait d'exploitation de la jante.

Ces défauts ou « pits » résultent du phénomène connu de « wheel pitting ». Le « wheel pitting » est un phénomène d'usure locale de la jante par abrasion. Les « pits » apparaissent sur le seat de la jante, dans la surface de contact sous tringle soumise à de fortes pressions. Ils résultent du frottement de particules, intercalées entre la face radialement intérieure du bourrelet et le siège de jante, qui vont jouer un rôle d'abrasif. Ces particules peuvent résulter de la dégradation locale du revêtement peint de la jante ou d'une pollution extérieure. Ces particules, pour être dommageables, doivent être suffisamment dures. Ces particules sont entraînées par les glissements de la face radialement intérieure du bourrelet sur le siège de jante. C'est la combinaison de fortes pressions et de glissements qui génère l'usure locale de la jante. Les longueurs glissées et les vitesses de glissement ont un impact sur l'usure locale de la jante. Il est à noter que les glissements se font essentiellement dans le plan méridien, selon la direction axiale, et secondairement selon la direction circonférentielle. La mise en dérive du pneumatique, caractérisée par un angle non nul entre le plan équatorial du pneumatique et la direction de déplacement du pneumatique, accentue le phénomène, en raison d'une augmentation des pressions et des glissements dans la surface de contact sous tringle.

Pour diminuer le phénomène de « wheel pitting », des solutions techniques, basées sur une diminution du frottement entre le bourrelet et le siège de jante, ont été envisagées soit au niveau de la jante, soit au niveau du pneumatique. Concernant la jante, le frottement peut être diminué soit par une lubrification de la jante par un produit adapté, soit par l'utilisation d'un revêtement de jante à faible coefficient de frottement. Concernant le pneumatique, le frottement peut être diminué par le choix d'un matériau élastomérique pour la couche de surface, comprenant de l'huile qui est exsudée de la couche de surface lors de la compression du bourrelet sur la jante et qui lubrifie donc la jante. Le frottement côté pneumatique peut également être diminué par l'adjonction d'un matériau de revêtement du bourrelet à faible coefficient de frottement. Enfin, la diminution du serrage de la tringle sur le siège de jante permet également de réduire le frottement, par une diminution des pressions de contact entre le bourrelet et le siège de jante. Les solutions techniques précédentes, relatives respectivement à la jante et au pneumatique, peuvent être utilisées seules ou en combinaison. Elles présentent toutes l'inconvénient d'augmenter le risque de rotation du pneumatique sur sa jante, sous l'effet d'une trop grande diminution des efforts de frottement entre le bourrelet et le siège de jante.

Les inventeurs se sont donnés pour objectif de diminuer la vitesse de formation des défauts ou « pits » critiques sur le siège de jante, pour augmenter la durée de vie de la jante et donc le nombre de cycles d'utilisation avant retrait.

Cet objectif a été atteint par un pneumatique pour avion comprenant :
- deux bourrelets respectivement destinés à entrer en contact avec une jante par au moins une face radialement intérieure de bourrelet,
- une armature de carcasse comprenant au moins une couche de carcasse reliant les deux bourrelets,
- la ou chaque couche de carcasse, s'enroulant dans chaque bourrelet, autour d'un élément de renforcement circonférentiel ayant une section méridienne de centre O et de diamètre D, appelé tringle,
- dans chaque bourrelet, une portion de serrage sous tringle s'étendant radialement à l'intérieur d'une portion d'armature de carcasse radialement intérieure à la tringle jusqu'à la face radialement intérieure de bourrelet,
- la portion de serrage sous tringle comprenant une couche de surface destinée à entrer en contact avec la jante par la face radialement intérieure de bourrelet, constituée d'un matériau élastomérique ayant un module d'élasticité à 10% d'allongement M₁ au moins égal à 5 MPa et au plus égal 9 MPa, et ayant une rigidité de cisaillement K₁,
- la portion de serrage sous tringle comprenant une couche rigide, radialement extérieure et adjacente à la couche de surface, constituée d'un tissu comprenant des renforts parallèles entre eux et enrobés dans un matériau élastomérique, et ayant une rigidité de cisaillement K₂ au moins égale à 5 fois la rigidité de cisaillement K₁ de la couche de surface,
- et la portion de serrage sous tringle comprenant une couche déformable, radialement extérieure et adjacente à la couche rigide et radialement intérieure et adjacente à la portion d'armature de carcasse radialement intérieure à la tringle, constituée d'un matériau élastomérique ayant un module d'élasticité à 10% d'allongement M₃ au plus égal au module d'élasticité à 10% d'allongement M₁ de la couche de surface , et ayant une rigidité de cisaillement K₃ au plus égale à 0.3 fois la rigidité de cisaillement K₁ de la couche de contact.

Alors que le pneumatique de l'état de la technique pris en référence comprend, dans chaque bourrelet, une portion de serrage sous tringle comprenant au moins une couche de surface, le pneumatique selon l'invention comprend, dans chaque bourrelet, une portion de serrage sous tringle comprenant un empilement d'au moins trois couches radialement superposées.

La couche la plus radialement intérieure est une couche de surface destinée à entrer en contact avec le siège de jante par la face radialement intérieure de bourrelet, constituée d'un matériau élastomérique ayant un module d'élasticité à 10% d'allongement M₁ au moins égal à 5 MPa et au plus égal 9 MPa. Le module M₁ doit être suffisamment élevé pour garantir la tenue mécanique de la couche de surface en utilisation. Par ailleurs, c'est le matériau élastomérique usuellement utilisé à ce poste dans l'état de la technique.

Radialement à l'extérieur et adjacente à la couche de surface est positionnée une couche rigide. Par couche rigide, on entend une couche ayant une rigidité de cisaillement K₂ au moins égale à 5 fois la rigidité de cisaillement K₁ de la couche de surface. Selon l'invention, la couche rigide est constituée d'un tissu comprenant des renforts parallèles entre eux et enrobés dans un matériau élastomérique. Ce choix de matériau est nécessaire pour atteindre les niveaux de module d'élasticité recherchés pour le matériau constitutif de la couche rigide. Un matériau élastomérique usuel seul ne permet pas d'atteindre ces niveaux de module d'élasticité. Par ailleurs le choix de renforts parallèles permet d'avoir un matériau orthotrope, c'est-à-dire avec des modules d'élasticité différents selon que l'on considère la direction des renforts ou la direction perpendiculaire aux renforts. Par ailleurs, les renforts forment avec la direction circonférentielle un angle compris entre 0° et 90°, et préférentiellement proche de 0°, ce qui correspond à des renforts orientés sensiblement selon la direction circonférentielle.

Radialement à l'extérieur et adjacente à la couche rigide est positionnée une couche déformable. Par couche déformable, on entend une couche ayant une rigidité de cisaillement K₃ au plus égale à 0.3 fois la rigidité de cisaillement K₁ de la couche de surface. La couche déformable est également radialement intérieure et adjacente à la portion d'armature de carcasse radialement intérieure à la tringle. La couche déformable est constituée d'un matériau élastomérique ayant un module d'élasticité à 10% d'allongement M₃ au plus égal au module d'élasticité à 10% d'allongement M₁ de la couche de surface. Par définition, la couche déformable doit avoir la plus faible rigidité de cisaillement K₃ parmi les au moins trois couches constitutives de la portion de serrage sous tringle. En tout état de cause, le module d'élasticité à 10% d'allongement M₃ du matériau élastomérique constitutif de la couche déformable doit être inférieur à celui du matériau élastomérique constitutif de la couche de surface et éventuellement égal, en particulier dans le cas où les matériaux constitutifs respectivement de la couche déformable et de la couche de surface sont identiques en raison d'un choix économique.

L'idée essentielle de l'invention est de reprendre les efforts mécaniques générés au niveau de la surface de contact sous tringle, à l'interface entre la face axialement intérieure du bourrelet et le siège de jante, par de grandes déformations radialement à l'intérieur de la tringle et par de petites déformations au voisinage radialement extérieur du siège de jante. En d'autres termes, en créant un gradient de rigidités de cisaillement radialement décroissant vers l'intérieur entre la couche rigide et la couche déformable, on localise les déformations essentiellement radialement à l'intérieur de la tringle et non l'interface entre le bourrelet et le siège de jante. Il en résulte une diminution des déplacements ou longueurs glissées à cette interface et, par conséquent, une initiation retardée des défauts ou « pits » sur le siège de jante.

La portion de serrage sous tringle a avantageusement une épaisseur radiale sous tringle, à l'aplomb du centre O de la section méridienne de la tringle, au moins égale à 2 mm et au plus égale à 3.5 mm. Cet intervalle d'épaisseur sous tringle correspond à un optimum des efforts de serrage du bourrelet sur le siège de jante, permettant à la fois le montage du pneumatique sur sa jante et l'absence de rotation du pneumatique sur sa jante en utilisation.

La couche de surface, la couche rigide et la couche déformable ayant, à l'aplomb du centre O de la section méridienne la tringle, des épaisseurs radiales sous tringle respectives, l'épaisseur radiale sous tringle de la couche de surface est au plus égale à l'épaisseur radiale sous tringle de la couche rigide et l'épaisseur radiale sous tringle de la couche rigide est au plus égale à l'épaisseur radiale sous tringle de la couche déformable. En d'autres termes, il y a un gradient d'épaisseurs croissant radialement vers l'intérieur pour les couches constitutives de la portion de serrage sous tringle.

La couche de surface a généralement une rigidité de cisaillement K₁ au moins égale à 4 N/mm, correspondant à une épaisseur radiale sous tringle maximale usuelle d'environ 0.45 mm et d'un module d'élasticité à 10% d'allongement M₁ minimal de l'ordre de 5 MPa.

La couche de surface a avantageusement une épaisseur radiale sous tringle au moins égale à 0.125 fois l'épaisseur radiale sous tringle de la portion de serrage sous tringle. Cette épaisseur minimale permet de minimiser la compression radiale de la couche de surface, autrement dit son écrasement, et d'avoir des déplacements dans la surface de contact imposés par les déplacements de la couche rigide. Elle permet en outre de garantir l'intégrité mécanique de la couche rigide en lui évitant tout contact direct avec le siège de jante et donc tout risque d'abrasion. Enfin, cette épaisseur minimale correspond à un minimum technologique en fabrication.

Avantageusement la couche rigide a une rigidité de cisaillement K₂ au plus égale à 17 fois la rigidité de cisaillement K₁ de la couche de surface. Au-delà de cette valeur de rigidité de cisaillement, le risque de rupture de la couche rigide devient élevé.

Selon un mode de réalisation préféré, les renforts de la couche rigide sont constitués d'au moins un matériau textile. Les renforts textiles sont préférés aux renforts métalliques dans le domaine des pneumatiques d'avion pour des raisons de gain de masse et de sécurité.

Encore préférentiellement, les renforts de la couche rigide sont constitués d'au moins un matériau textile de type polyamide aromatique. Un polyamide aromatique, tel que par exemple l'aramide, a un module d'élasticité élevé permettant d'atteindre le niveau de rigidité de cisaillement recherché pour la couche rigide.

La couche rigide a une épaisseur radiale sous tringle au moins égale à 0.375 fois l'épaisseur radiale sous tringle de la portion de serrage sous tringle. Cette épaisseur radiale minimale permet l'utilisation de tissu textile comme matériau constitutif de la couche rigide.

La couche rigide a une largeur axiale au moins égale au diamètre de la tringle et au plus égale à 2 fois le diamètre de la tringle. La couche rigide doit s'étendre axialement sur au moins la partie de la portion de serrage sous tringle soumise aux sollicitations mécaniques les plus élevées, ce qui correspond sensiblement a une largeur axiale comprise entre une fois et deux fois le diamètre de la tringle. De plus, la couche rigide est une couche sensiblement axiale qui ne s'enroule ni axialement vers l'intérieur ni axialement vers l'extérieur autour de la tringle.

Préférentiellement, la couche déformable est constituée d'un matériau élastomérique ayant un module d'élasticité à 10% d'allongement M₃ au moins égal à 0.5 fois le module d'élasticité à 10% d'allongement M₁ de la couche de surface. Ce module d'élasticité M₃ doit être préférentiellement significativement inférieur à celui du matériau élastomérique de la couche de surface, par exemple de l'ordre de la moitié. Mais il ne doit toutefois pas être trop faible pour éviter la rupture de la couche déformable.

Enfin, la couche déformable a une épaisseur radiale sous tringle au moins égale à 0.5 fois l'épaisseur radiale sous tringle de la portion de serrage sous tringle. Cette épaisseur minimale permet une déformabilité suffisante de la couche déformable sans rupture.

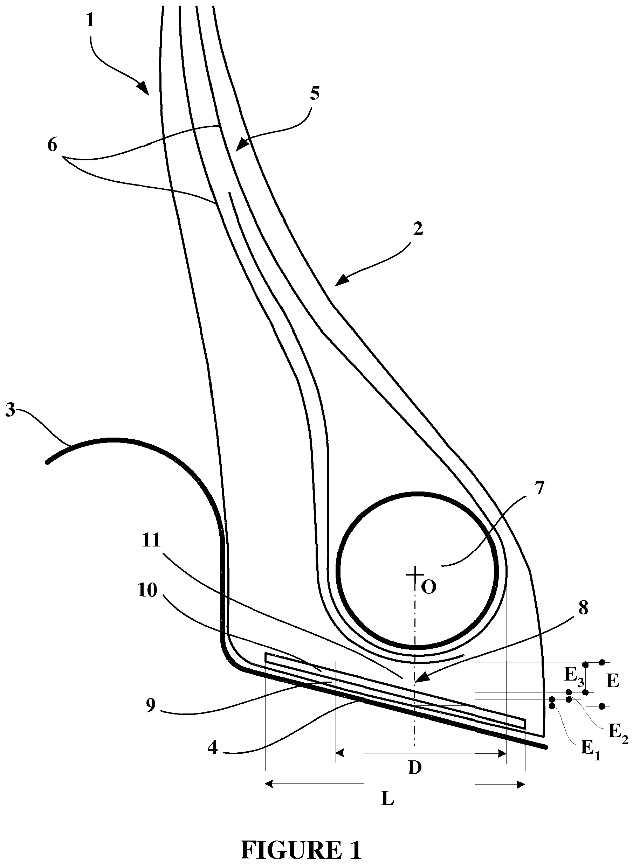

Les caractéristiques et autres avantages de l'invention seront mieux compris à l'aide de la figure 1 qui présente une coupe méridienne d'un bourrelet de pneumatique selon l'invention.

La figure 1 n'est pas représentée à l'échelle. Tous les éléments ne sont pas nécessairement représentés.

La figure 1 décrit un bourrelet 2 d'un pneumatique 1 pour avion, destiné à entrer en contact avec une jante 3 par au moins une face radialement intérieure de bourrelet 4. Dans le bourrelet 2, deux couches de carcasse 6 constitutives d'une armature de carcasse 5 s'enroulent respectivement de l'intérieur vers l'extérieur et de l'extérieur vers l'intérieur autour d'une tringle 7 ayant une section méridienne de centre O et de diamètre D. Une portion de serrage sous tringle 8 s'étend radialement à l'intérieur d'une portion d'armature de carcasse 5 radialement intérieure à la tringle 7 jusqu'à la face radialement intérieure de bourrelet 4.

La portion de serrage sous tringle 8 comprend 3 couches s'étendant radialement de l'intérieur vers l'extérieur: une couche de surface 9, une couche rigide 10 et une couche déformable 11 ayant, à l'aplomb du centre O de la section méridienne la tringle 7, des épaisseurs radiales sous tringle respectives E₁, E₂ et E₃. La portion de serrage sous tringle 8 a une épaisseur radiale sous tringle E égale à la somme des épaisseurs radiales sous tringle respectives E₁, E₂ et E₃. Dans le mode de réalisation représenté, l'épaisseur radiale sous tringle E₁ de la couche de surface 9 est inférieure à l'épaisseur radiale sous tringle E₂ de la couche rigide 10, elle-même inférieure à l'épaisseur radiale sous tringle E₃ de la couche rigide 11. De plus, la couche rigide 10 a une largeur axiale L supérieure au diamètre D de la tringle 7.

L'invention a été plus particulièrement étudiée pour un pneumatique d'avion à armature de carcasse radiale de dimension 46x17.0R20, utilisé sur un avion de ligne, et dont la pression nominale est 15.9 bars, la charge nominale 20642 daN et la vitesse maximale 378 km/h.

Dans l'exemple étudié, la couche de surface est constituée d'un matériau élastomérique ayant un module d'élasticité à 10% d'allongement M₁ égal à 8 MPa, et a une épaisseur radiale sous tringle E₁ égale à 0.4 mm. La couche rigide est constituée d'un tissu dont les renforts orientés circonférentiellement sont en polyamide aromatique de type aramide et de module d'élasticité égale à 120 MPa, et a une épaisseur radiale sous tringle E₂ égale à 1.1 mm. Enfin, la couche déformable est constituée d'un matériau élastomérique ayant un module d'élasticité à 10% d'allongement M₃ égal à 4 MPa, et a une épaisseur radiale sous tringle E₃ égale à 1.5 mm. Par conséquent, la portion de serrage sous tringle a une épaisseur radiale sous tringle totale E égale à 3 mm.

Dans l'exemple étudié, des simulations numériques de calculs par éléments finis ont montré que les déplacements dans la surface de contact entre la face radialement intérieure du bourrelet et le siège de jante étaient sensiblement diminués pour un pneumatique selon l'invention par rapport à un pneumatique de référence selon l'état de la technique. Par ailleurs, des tests comparatifs entre des ensembles montés comprenant des pneumatiques respectivement selon l'état de la technique et selon l'invention ont montré une diminution significative du nombre de défauts observés sur le siège de jante.

L'invention n'est pas limitée à une portion de serrage sous tringle comprenant trois couches. Elle peut être extrapolée à une portion de serrage sous tringle comprenant plus de trois couches, dont au moins deux couches déformables, dans la mesure où les au moins deux couches déformables radialement extérieures à la couche rigide constituent un gradient de rigidités de cisaillement radialement décroissant vers l'extérieur, c'est-à-dire en se rapprochant radialement de la tringle. L'empilement de trois couches peut également être réduit, le cas échéant, à deux couches, lorsque la couche de surface est suffisamment mince pour être intégrée au mélange d'enrobage des renforts textiles de la couche rigide : dans ce cas, le mélange d'enrobage de la couche rigide, situé radialement à l'intérieur des renforts textiles, joue le rôle de couche de surface.

## Revendications

1. Pneumatique (1) pour avion comprenant :
- deux bourrelets (2) respectivement destinés à entrer en contact avec une jante (3) par au moins une face radialement intérieure de bourrelet (4),
- une armature de carcasse (5) comprenant au moins une couche de carcasse (6) reliant les deux bourrelets (2),
- la ou chaque couche de carcasse (6), s'enroulant dans chaque bourrelet (2), autour d'un élément de renforcement circonférentiel ayant une section méridienne de centre (O) et de diamètre (D), appelé tringle (7),
- dans chaque bourrelet (2), une portion de serrage sous tringle (8) s'étendant radialement à l'intérieur d'une portion d'armature de carcasse (5) radialement intérieure à la tringle (7) jusqu'à la face radialement intérieure de bourrelet (4),
- la portion de serrage sous tringle (8) comprenant une couche de surface (9) destinée à entrer en contact avec la jante (3) par la face radialement intérieure de bourrelet (4), **caractérisé en ce que** la couche de surface (9) est constituée d'un matériau élastomérique ayant un module d'élasticité à 10% d'allongement M₁ au moins égal à 5 MPa et au plus égal 9 MPa, et ayant une rigidité de cisaillement K₁,
**en ce que** la portion de serrage sous tringle (8) comprend une couche rigide (10), radialement extérieure et adjacente à la couche de surface (9), constituée d'un tissu comprenant des renforts parallèles entre eux et enrobés dans un matériau élastomérique, et ayant une rigidité de cisaillement K₂ au moins égale à 5 fois la rigidité de cisaillement K₁ de la couche de surface (9) **et en ce que** la portion de serrage sous tringle (8) comprend une couche déformable (11), radialement extérieure et adjacente à la couche rigide (10) et radialement intérieure et adjacente à la portion d'armature de carcasse (5) radialement intérieure à la tringle (7), constituée d'un matériau élastomérique ayant un module d'élasticité à 10% d'allongement M₃ au plus égal au module d'élasticité à 10% d'allongement M₁ de la couche de surface (9), et ayant une rigidité de cisaillement K₃ au plus égale à 0.3 fois la rigidité de cisaillement K₁ de la couche de surface (9).

2. Pneumatique (1) pour avion selon la revendication 1, **caractérisé en ce que** la portion de serrage sous tringle (8) a une épaisseur radiale sous tringle (E), à l'aplomb du centre (O) de la section méridienne la tringle (7), au moins égale à 2 mm et au plus égale à 3.5 mm.

3. Pneumatique (1) pour avion selon l'une des revendications 1 ou 2, la couche de surface (9), la couche rigide (10) et la couche déformable (11) ayant, à l'aplomb du centre (O) de la section méridienne la tringle (7), des épaisseurs radiales sous tringle respectives (E₁, E₂, E₃), **caractérisé en ce que** l'épaisseur radiale sous tringle (E₁) de la couche de surface (9) est au plus égale à l'épaisseur radiale sous tringle (E₂) de la couche rigide (10) **et en ce que** l'épaisseur radiale sous tringle (E₂) de la couche rigide (10) est au plus égale à l'épaisseur radiale sous tringle (E₃) de la couche déformable (11).

4. Pneumatique (1) pour avion selon l'une quelconque des revendications 1 à 3, **caractérisé en ce que** la couche de surface (9) a une rigidité de cisaillement K₁ au moins égale à 4 N/mm.

5. Pneumatique (1) pour avion selon l'une quelconque des revendications 1 à 4, **caractérisé en ce que** la couche de surface (9) a une épaisseur radiale sous tringle (E₁) au moins égale à 0.125 fois l'épaisseur radiale sous tringle (E) de la portion de serrage sous tringle (8).

6. Pneumatique (1) pour avion selon l'une quelconque des revendications 1 à 5, **caractérisé en ce que** la couche rigide (10) a une rigidité de cisaillement K₂ au plus égale à 17 fois la rigidité de cisaillement K₁ de la couche de surface (9).

7. Pneumatique (1) pour avion selon l'une quelconque des revendications 1 à 6, **caractérisé en ce que** les renforts de la couche rigide (10) sont constitués d'au moins un matériau textile.

8. Pneumatique (1) pour avion selon l'une quelconque des revendications 1 à 7, **caractérisé en ce que** les renforts de la couche rigide (10) sont constitués d'au moins un matériau textile de type polyamide aromatique.

9. Pneumatique (1) pour avion selon l'une quelconque des revendications 1 à 8, **caractérisé en ce que** la couche rigide (10) a une épaisseur radiale sous tringle (E₂) au moins égale à 0.375 fois l'épaisseur radiale sous tringle (E) de la portion de serrage sous tringle (8).

10. Pneumatique (1) pour avion selon l'une quelconque des revendications 1 à 9, **caractérisé en ce que** la couche rigide (10) a une largeur axiale (L) au moins égale au diamètre (D) de la tringle (7) et au plus égale à 2 fois le diamètre (D) de la tringle (7).

11. Pneumatique (1) pour avion selon l'une quelconque des revendications 1 à 10, **caractérisé en ce que** la couche déformable (11) est constituée d'un matériau élastomérique ayant un module d'élasticité à 10% d'allongement M₃ au moins égal à 0.5 fois le module d'élasticité à 10% d'allongement M₁ de la couche de surface (9).

12. Pneumatique (1) pour avion selon l'une quelconque des revendications 1 à 11, **caractérisé en ce que** la couche déformable (11) a une épaisseur radiale sous tringle (E₃) au moins égale à 0.5 fois l'épaisseur radiale sous tringle (E) de la portion de serrage sous tringle (8).

## Patentansprüche

1. Flugzeugreifen (1), der enthält:
- zwei Wülste (2), die je dazu bestimmt sind, über mindestens eine radial innere Wulstseite (4) mit einer Felge (3) in Kontakt zu kommen,
- eine Karkassenbewehrung (5), die mindestens eine Karkassenschicht (6) enthält, die die zwei Wülste (2) verbindet,
- wobei die oder jede Karkassenschicht (6) sich in jedem Wulst (2) um ein Umfangsverstärkungselement, das einen Meridianquerschnitt mit einer Mitte (O) und mit einem Durchmesser (D) hat, Wulstkern (7) genannt, wickelt,
- in jedem Wulst (2) ein Klemmabschnitt-unter-Wulstkern (8) sich radial im Inneren eines Karkassenbewehrungsabschnitts (5) radial innen zum Wulstkern (7) bis zur radial inneren Wulstseite (4) erstreckt,
- der Klemmabschnitt-unter-Wulstkern (8) eine Oberflächenschicht (9) enthält, die dazu bestimmt ist, durch die radial innere Wulstseite (4) mit der Felge (3) in Kontakt zu kommen,
**dadurch gekennzeichnet, dass** die Oberflächenschicht (9) aus einem Elastomermaterial besteht, das einen Elastizitätsmodul bei 10% Dehnung M₁ mindestens gleich 5 MPa und höchstens gleich 9 MPa und eine Schersteifigkeit K₁ hat,
dass der Klemmabschnitt-unter-Wulstkern (8) eine steife Schicht (10) radial außen und der Oberflächenschicht (9) benachbart enthält, die aus einem Gewebe besteht, das zueinander parallele und in ein Elastomermaterial gehüllte Verstärkungen enthält und eine Schersteifigkeit K₂ mindestens gleich dem 5-Fachen der Schersteifigkeit K₁ der Oberflächenschicht (9) hat,
und dass der Klemmabschnitt-unter-Wulstkern (8) eine verformbare Schicht (11) radial außen und der steifen Schicht (10) benachbart und radial innen und dem Karkassenbewehrungsabschnitt (5) radial innen zum Wulstkern (7) benachbart enthält, die aus einem Elastomermaterial besteht, das einen Elastizitätsmodul bei 10% Dehnung M₃ höchstens gleich dem Elastizitätsmodul bei 10% Dehnung M₁ der Oberflächenschicht (9) und eine Schersteifigkeit K₃ höchstens gleich dem 0,3-Fachen der Schersteifigkeit K₁ der Oberflächenschicht (9) hat.

2. Flugzeugreifen (1) nach Anspruch 1, **dadurch gekennzeichnet, dass** der Klemmabschnitt-unter-Wulstkern (8) eine radiale Dicke-unter-Wulstkern (E) lotrecht zur Mitte (O) des Meridianquerschnitts des Wulstkerns (7) mindestens gleich 2 mm und höchstens gleich 3,5 mm hat.

3. Flugzeugreifen (1) nach einem der Ansprüche 1 oder 2, wobei die Oberflächenschicht (9), die steife Schicht (10) und die verformbare Schicht (11) lotrecht zur Mitte (O) des Meridianquerschnitts des Wulstkerns (7) radiale Dicken-unter-Wulstkern (E₁, E₂, E₃) haben, **dadurch gekennzeichnet, dass** die radiale Dicke-unter-Wulstkern (E₁) der Oberflächenschicht (9) höchstens gleich der radialen Dicke-unter-Wulstkern (E₂) der steifen Schicht (10) ist, und dass die radiale Dicke-unter-Wulstkern (E₂) der steifen Schicht (10) höchstens gleich der radialen Dicke-unter-Wulstkern (E₃) der verformbaren Schicht (11) ist.

4. Flugzeugreifen (1) nach einem der Ansprüche 1 bis 3, **dadurch gekennzeichnet, dass** die Oberflächenschicht (9) eine Schersteifigkeit K₁ mindestens gleich 4 N/mm hat.

5. Flugzeugreifen (1) nach einem der Ansprüche 1 bis 4, **dadurch gekennzeichnet, dass** die Oberflächenschicht (9) eine radiale Dicke-unter-Wulstkern (E₁) mindestens gleich dem 0,125-Fachen der radialen Dicke-unter-Wulstkern (E) des Klemmabschnitts-unter-Wulstkern (8) hat.

6. Flugzeugreifen (1) nach einem der Ansprüche 1 bis 5, **dadurch gekennzeichnet, dass** die steife Schicht (10) eine Schersteifigkeit K₂ höchstens gleich dem 17-Fachen der Schersteifigkeit K₁ der Oberflächenschicht (9) hat.

7. Flugzeugreifen (1) nach einem der Ansprüche 1 bis 6, **dadurch gekennzeichnet, dass** die Verstärkungen der steifen Schicht (10) aus mindestens einem Textilmaterial bestehen.

8. Flugzeugreifen (1) nach einem der Ansprüche 1 bis 7, **dadurch gekennzeichnet, dass** die Verstärkungen der steifen Schicht (10) aus mindestens einem Textilmaterial der Art aromatisches Polyamid bestehen.

9. Flugzeugreifen (1) nach einem der Ansprüche 1 bis 8, **dadurch gekennzeichnet, dass** die steife Schicht (10) eine radiale Dicke-unter-Wulstkern (E₂) mindestens gleich dem 0,375-Fachen der radialen Dicke-unter-Wulstkern (E) des Klemmabschnitts-unter-Wulstkern (8) hat.

10. Flugzeugreifen (1) nach einem der Ansprüche 1 bis 9, **dadurch gekennzeichnet, dass** die steife Schicht (10) eine axiale Breite (L) mindestens gleich dem Durchmesser (D) des Wulstkerns (7) und höchstens gleich dem Zweifachen des Durchmessers (D) des Wulstkerns (7) hat.

11. Flugzeugreifen (1) nach einem der Ansprüche 1 bis 10, **dadurch gekennzeichnet, dass** die verformbare Schicht (11) aus einem Elastomermaterial besteht, das einen Elastizitätsmodul bei 10% Dehnung M₃ mindestens gleich dem 0,5-Fachen des Elastizitätsmoduls bei 10% Dehnung M₁ der Oberflächenschicht (9) hat.

12. Flugzeugreifen (1) nach einem der Ansprüche 1 bis 11, **dadurch gekennzeichnet, dass** die verformbare Schicht (11) eine radiale Dicke-unter-Wulstkern (E₃) mindestens gleich dem 0,5-Fachen der radialen Dicke-unter-Wulstkern (E) des Klemmabschnitts-unter-Wulstkern (8) hat.

## Claims

1. Aircraft tyre (1) comprising:
- two beads (2) respectively intended to come into contact with a rim (3) via at least one radially interior bead face (4),
- a carcass reinforcement (5) comprising at least one carcass layer (6) connecting the two beads (2),
- the or each carcass layer (6), being wrapped, in each bead (2), around a circumferential reinforcing element having a meridian section of centre (O) and diameter (D), referred to as a bead wire (7),
- in each bead (2), a portion (8) clamped under the bead wire extending radially on the inside of a carcass reinforcement portion (5) radially on the inside of the bead wire (7) as far as the radially interior bead face (4),
- the portion (8) clamped under the bead wire comprising a surface layer (9) intended to come into contact with the rim (3) via the radially interior bead face (4), **characterized in that** the surface layer (9) is made of an elastomeric material having an elastic modulus M₁ at 10% elongation at least equal to 5 MPa and at most equal to 9 MPa, and having a shear stiffness K₁, **in that** the portion (8) clamped under the bead wire comprises a rigid layer (10), radially on the outside of and adjacent to the surface layer (9), which is made of a fabric comprising reinforcers that are mutually parallel and coated in an elastomeric material, and having a shear stiffness K₂ at least equal to five times the shear stiffness K₁ of the surface layer (9) **and in that** the portion (8) clamped under the bead wire comprises a deformable layer (11), radially on the outside of and adjacent to the rigid layer (10) and radially on the inside of and adjacent to the carcass reinforcement portion (5) radially on the inside of the bead wire (7), which is made of an elastomeric material having an elastic modulus M₃ at 10% elongation at most equal to the elastic modulus M₁ at 10% elongation of the surface layer (9), and having a shear stiffness K₃ at most equal to 0.3 times the shear stiffness K₁ of the surface layer (9).

2. Aircraft tyre (1) according to Claim 1, **characterized in that** the portion (8) clamped under the bead wire has a radial thickness (E) under the bead wire, in vertical alignment with the centre (O) of the meridian section of the bead wire (7), at least equal to 2 mm and at most equal to 3.5 mm.

3. Aircraft tyre (1) according to either of Claims 1 and 2, the surface layer (9), the rigid layer (10) and the deformable layer (11) having, in vertical alignment with the centre (O) of the meridian section of the bead wire (7), respective radial thicknesses (E₁, E₂, E₃) under the bead wire, **characterized in that** the radial thickness (E₁) under the bead wire of the surface layer (9) is at most equal to the radial thickness (E₂) under the bead wire of the rigid layer (10), **and in that** the radial thickness (E₂) under the bead wire of the rigid layer (10) is at most equal to the radial thickness (E₃) under the bead wire of the deformable layer (11).

4. Aircraft tyre (1) according to any one of Claims 1 to 3, **characterized in that** the surface layer (9) has a shear stiffness K₁ at least equal to 4 N/mm.

5. Aircraft tyre (1) according to any one of Claims 1 to 4, **characterized in that** the surface layer (9) has a radial thickness (E₁) under the bead wire at least equal to 0.125 times the radial thickness (E) under the bead wire of the portion (8) clamped under the bead wire.

6. Aircraft tyre (1) according to any one of Claims 1 to 5, **characterized in that** the rigid layer (10) has a shear stiffness K₂ at most equal to 17 times the shear stiffness K₁ of the surface layer (9).

7. Aircraft tyre (1) according to any one of Claims 1 to 6, **characterized in that** the reinforcers of the rigid layer (10) are made of at least one textile material.

8. Aircraft tyre (1) according to any one of Claims 1 to 7, **characterized in that** the reinforcers of the rigid layer (10) are made of at least one textile material of the aromatic polyamide type.

9. Aircraft tyre (1) according to any one of Claims 1 to 8, **characterized in that** the rigid layer (10) has a radial thickness (E₂) under the bead wire at least equal to 0.375 times the radial thickness (E) under the bead wire of the portion (8) clamped under the bead wire.

10. Aircraft tyre (1) according to any one of Claims 1 to 9, **characterized in that** the rigid layer (10) has an axial width (L) at least equal to the diameter (D) of the bead wire (7) and at most equal to twice the diameter (D) of the bead wire (7).

11. Aircraft tyre (1) according to any one of Claims 1 to 10, **characterized in that** the deformable layer (11) is made of an elastomeric material having an elastic modulus M₃ at 10% elongation at least equal to 0.5 times the elastic modulus M₁ at 10% elongation of the surface layer (9).

12. Aircraft tyre (1) according to any one of Claims 1 to 11, **characterized in that** the deformable layer (11) has a radial thickness (E₃) under the bead wire at least equal to 0.5 times the radial thickness (E) under the bead wire of the portion (8) clamped under the bead wire.
